# EUROPEAN PATENT SPECIFICATION

(11) **EP 4 239 084 B1**
(45) Date of publication and mention of the grant of the patent: **06.05.2026**
(21) Application number: 22164701.9
(22) Date of filing: 28.03.2022
(51) Int. Cl.: C13B 30/02

(54) **A CONTINUOUS VACUUM CRYSTALLIZER AND A METHOD OF CRYSTALLIZING SUGAR**
KONTINUIERLICHER VAKUUMKRISTALLISATOR UND VERFAHREN ZUM KRISTALLISIEREN VON ZUCKER
CRISTALLISEUR À VIDE CONTINU ET PROCÉDÉ DE CRISTALLISATION DU SUCRE

(30) Priority: 05.03.2022 IN 202211012010
(43) Date of publication of application: 06.09.2023
(73) Proprietor: Al Khaleej Sugar Co. (L.L.C.), Deira Dubai (AE)
(72) Inventor: GHURAIR, Jamal Al, Dubai (AE); FERKH, Riad El, Dubai (AE); CHENNAKRISHNAN, Lakshmama Gounder, Dubai (AE)
(74) Representative: Ponti & Partners, S.L.P

(56) References cited:
- WO-A1-2007/113849
- BR-A- 9 105 163
- DOLLS ANDREAS ET AL: "Reconsidering vapor compression for sugar crystallization", 1 January 2010 (2010-01-01), DE, pages 334 - 359, XP055959441, ISSN: 0344-8657, Retrieved from the Internet <URL:http://dx.doi.org/10.36961/si9852> DOI: 10.36961/si9852
- REZVANIVAND FANAEI ADEL ET AL: "investigation of thermal vapor compressor as an energy saving tool for the crystallization of sugar in a sugar processing plant", vol. 44, no. 7, 24 May 2021 (2021-05-24), US, XP055959447, ISSN: 0145-8876, Retrieved from the Internet <URL:https://onlinelibrary.wiley.com/doi/full-xml/10.1111/jfpe.13727> DOI: 10.1111/jfpe.13727

## Description

### FIELD OF THE INVENTION

The present disclosure relates to sugar crystallization and in particular relates to, a continuous vacuum crystallizer and a method of crystallizing sugar in the continuous vacuum crystallizer.

### BACKGROUND

Currently, sugar is one of the largest industries in the world, and crystallization is of central importance there. Crystallization of the sugar is a technological step to recover the sucrose dissolved in a thick juice. Generally, various crystallization devices, such as a vertical continuous vacuum pan, are employed for performing the crystallization process to obtain the sugar content from a liquor. For instance, such crystallization devices include multiple chambers operating independently to perform the crystallization process in order to extract the sugar content from the liquor. Further, in such crystallization devices, the crystallization process is performed under higher pressure and a higher temperature within multiple chambers. However, this results in the formation of the sugar crystals at a higher temperature which further leads to an increase in the color of the sugar mother liquor. Although, such a change in color of the sugar crystals may not be suitable and therefore, require further processing of the sugar crystals in order to obtain the suitable color of the sugar crystal. However, further processing of the sugar crystals results in a substantial increase in the overall production cost of the sugar crystals. Further, in the crystallization devices, each of the multiple chambers is provided with an independent actuation unit having various sub-components, such as separate chambers, pumps, vacuum, and steam valves. However, such an arrangement substantially increases the overall maintenance cost of the crystallization devices. In addition, such existing crystallization devices have multi risk of vacuum leaks & liquor leaks at each chamber. WO2007/113849 A1 describes a vertical continuous vacuum pan apparatus consisting of eight chambers and a storage or buffer tank at the top. Further, BR9105163A describes an apparatus for continuous evaporation crystallization of a mixture of acyclic crystals and a saturated acyclic syrup.

### SUMMARY

This summary is provided to introduce a selection of concepts, in a simplified format, that are further described in the detailed description of the invention. This summary is neither intended to identify key or essential inventive concepts of the invention and nor is it intended for determining the scope of the invention.

The invention is set out in the appended set of claims.

To further clarify advantages and features of the present invention, a more particular description of the invention will be rendered by reference to specific embodiments thereof, which is illustrated in the appended drawings. It is appreciated that these drawings depict only typical embodiments of the invention and are therefore not to be considered limiting of its scope. The invention will be described and explained with additional specificity and detail with the accompanying drawings.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
Figure 1 illustrates an elevated view of a continuous vacuum crystallizer for crystallization of sugar, according to an embodiment of the present disclosure;
Figure 2 illustrates an isometric view of the continuous vacuum crystallizer for crystallization of sugar, according to an embodiment of the present disclosure;
Figure 3 illustrates a sectional view of the continuous vacuum crystallizer, according to an embodiment of the present disclosure;
Figure 4 illustrates a partial sectional view of the continuous vacuum crystallizer depicting the receiver chamber and the plurality of seed chamber, according to an embodiment of the present disclosure;
Figure 5 illustrates a partial sectional view of the continuous vacuum crystallizer 100 depicting the plurality of boiling chambers, according to an embodiment of the present disclosure;
Figure 6 illustrates a top sectional view of the continuous vacuum crystallizer depicting at least one vacuum chamber for crystallization of sugar, according to an embodiment of the present disclosure;
Figure 7 illustrates an isometric sectional view of the continuous vacuum crystallizer depicting at least one vacuum chamber, according to an embodiment of the present disclosure;
Figure 8 illustrates a schematic view of an environment depicting re-circulation of steam to the continuous vacuum crystallizer, according to an embodiment of the present disclosure; and
Figure 9 illustrates a flowchart depicting a method of crystallizing sugar in the continuous vacuum crystallizer, according to an embodiment of the present disclosure.

Further, skilled artisans will appreciate that elements in the drawings are illustrated for simplicity and may not have been necessarily been drawn to scale. For example, the flow charts illustrate the method in terms of the most prominent steps involved to help to improve understanding of aspects of the present invention. Furthermore, in terms of the construction of the device, one or more components of the device may have been represented in the drawings by conventional symbols, and the drawings may show only those specific details that are pertinent to understanding the embodiments of the present invention so as not to obscure the drawings with details that will be readily apparent to those of ordinary skill in the art having benefit of the description herein.

### DETAILED DESCRIPTION OF FIGURES

For the purpose of promoting an understanding of the principles of the invention, reference will now be made to the embodiment illustrated in the drawings and specific language will be used to describe the same. Unless otherwise defined, all technical and scientific terms used herein have the same meaning as commonly understood by one of ordinary skilled in the art to which this invention belongs. The system, methods, and examples provided herein are illustrative only and not intended to be limiting.

The term "some" as used herein is defined as "none, or one, or more than one, or all." Accordingly, the terms "none," "one," "more than one," "more than one, but not all" or "all" would all fall under the definition of "some." The term "some embodiments" may refer to no embodiments or to one embodiment or to several embodiments or to all embodiments. Accordingly, the term "some embodiments" is defined as meaning "no embodiment, or one embodiment, or more than one embodiment, or all embodiments."

The terminology and structure employed herein is for describing, teaching and illuminating some embodiments and their specific features and elements and does not limit, restrict or reduce the scope of the claims or their equivalents.

More specifically, any terms used herein such as but not limited to "includes," "comprises," "has," "consists," and grammatical variants thereof do NOT specify an exact limitation or restriction and certainly do NOT exclude the possible addition of one or more features or elements, unless otherwise stated, and furthermore must NOT be taken to exclude the possible removal of one or more of the listed features and elements, unless otherwise stated with the limiting language "MUST comprise" or "NEEDS TO include."

Whether or not a certain feature or element was limited to being used only once, either way it may still be referred to as "one or more features" or "one or more elements" or "at least one feature" or "at least one element." Furthermore, the use of the terms "one or more" or "at least one" feature or element do NOT preclude there being none of that feature or element, unless otherwise specified by limiting language such as "there NEEDS to be one or more . . . " or "one or more element is REQUIRED."

Unless otherwise defined, all terms, and especially any technical and/or scientific terms, used herein may be taken to have the same meaning as commonly understood by one having an ordinary skill in the art.

Reference is made herein to some "embodiments." It should be understood that an embodiment is an example of a possible implementation of any features and/or elements presented in the attached claims. Some embodiments have been described for the purpose of illuminating one or more of the potential ways in which the specific features and/or elements of the attached claims fulfil the requirements of uniqueness, utility and non-obviousness.

Use of the phrases and/or terms such as but not limited to "a first embodiment," "a further embodiment," "an alternate embodiment," "one embodiment," "an embodiment," "multiple embodiments," "some embodiments," "other embodiments," "further embodiment", "furthermore embodiment", "additional embodiment" or variants thereof do NOT necessarily refer to the same embodiments. Unless otherwise specified, one or more particular features and/or elements described in connection with one or more embodiments may be found in one embodiment, or may be found in more than one embodiment, or may be found in all embodiments, or may be found in no embodiments. Although one or more features and/or elements may be described herein in the context of only a single embodiment, or alternatively in the context of more than one embodiment, or further alternatively in the context of all embodiments, the features and/or elements may instead be provided separately or in any appropriate combination or not at all. Conversely, any features and/or elements described in the context of separate embodiments may alternatively be realized as existing together in the context of a single embodiment.

Any particular and all details set forth herein are used in the context of some embodiments and therefore should NOT be necessarily taken as limiting factors to the attached claims. The attached claims and their legal equivalents can be realized in the context of embodiments other than the ones used as illustrative examples in the description below.

Embodiments of the present invention will be described below in detail with reference to the accompanying drawings.

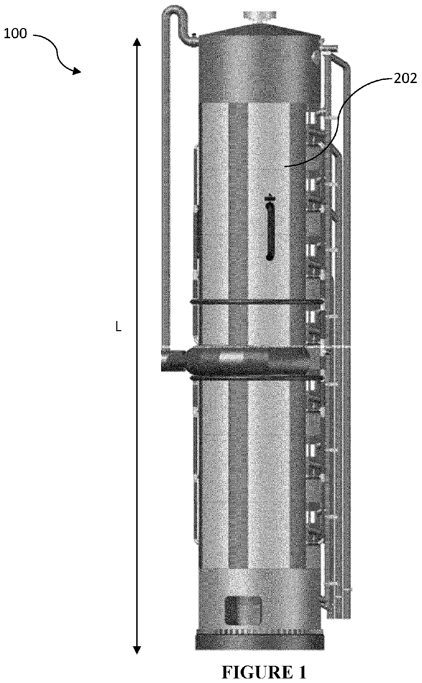

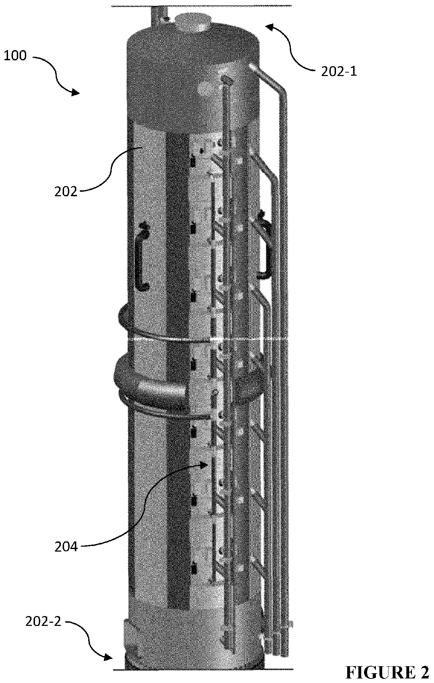

**Figure 1** illustrates an elevated view of a continuous vacuum crystallizer 100 for crystallization of sugar, according to an embodiment of the present disclosure. **Figure 2** illustrates an isometric view of the continuous vacuum crystallizer 100 for crystallization of sugar, according to an embodiment of the present disclosure. In an embodiment, the continuous vacuum crystallizer 100 may be employed in industries, such as a beet sugar industry and a cane sugar industry, for crystallization of sugar. Referring to Figure 1, the continuous vacuum crystallizer 100 includes, but is not limited to, a cylindrical housing 202 adapted to accommodate various sub-components of the continuous vacuum crystallizer 100. The cylindrical housing 202 may include a top portion 202-1 and a bottom portion 202-2 distal to the top portion 202-1. Constructional and operational aspects of the continuous vacuum crystallizer 100 are explained in subsequent sections of the present disclosure.

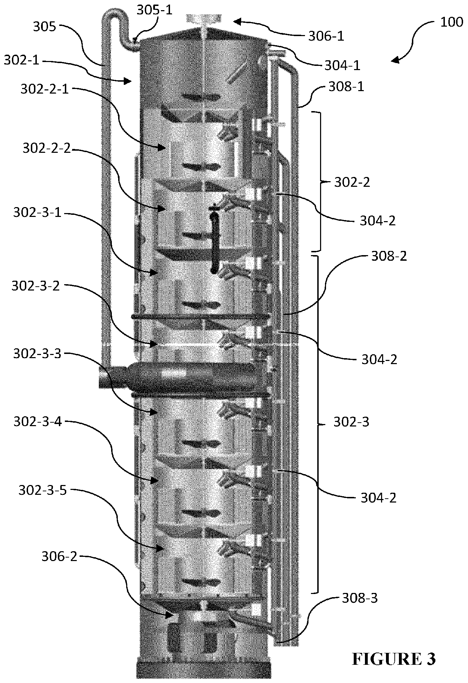

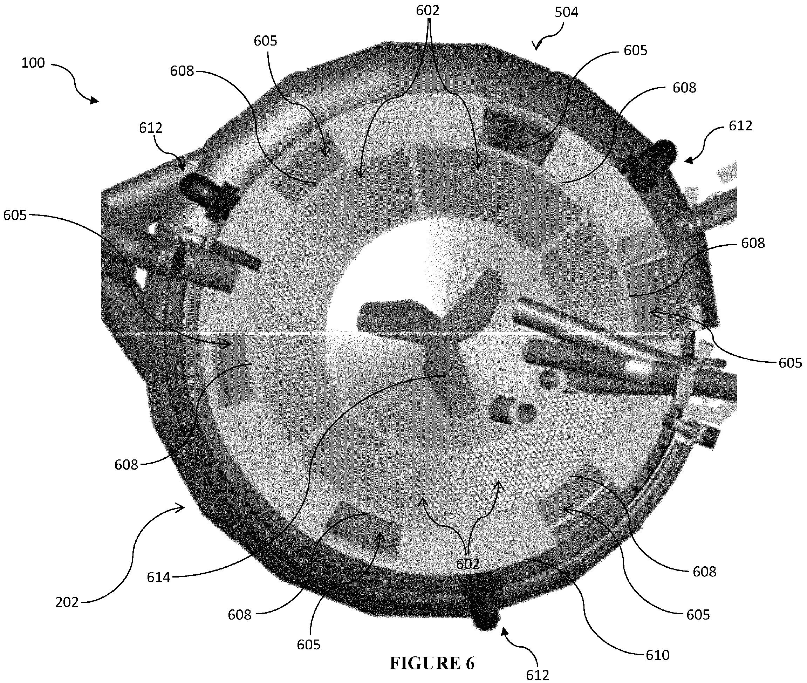

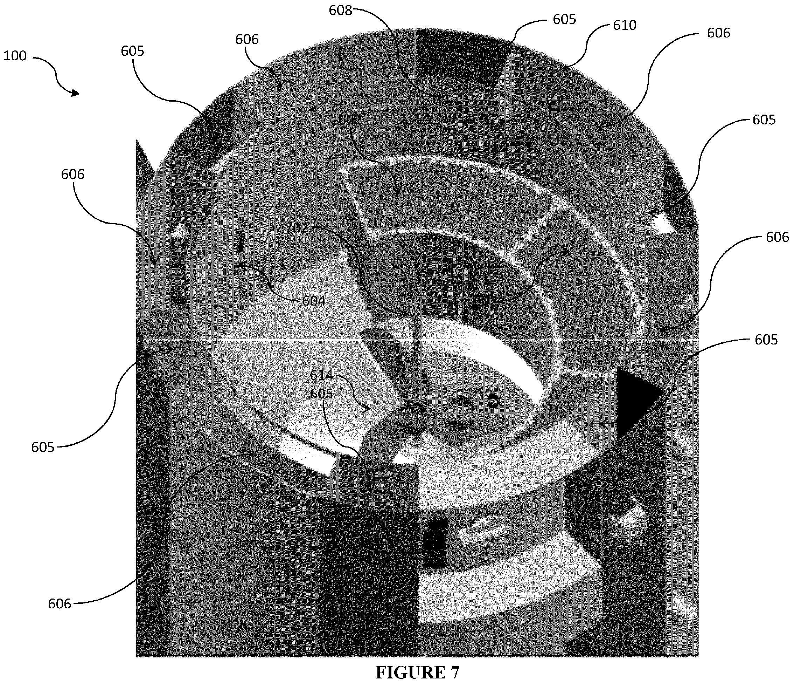

**Figure 3** illustrates a sectional view of the continuous vacuum crystallizer 100, according to an embodiment of the present disclosure. Referring to Figure 3, in the illustrated embodiment, the continuous vacuum crystallizer 100 includes a plurality of vacuum chambers 302 coaxially stacked in the cylindrical housing 202 over each other. Each of the plurality of vacuum chambers 302 is adapted to be in fluid communication with each other. One of the plurality of vacuum chambers 302 is adapted to receive mother liquor which is cascaded down through each of the plurality of chambers 302. Constructional details of the plurality of vacuum chamber 302 are explained in the subsequent sections with respect to the description of Figure 6 and Figure 7 of the present disclosure.

In an embodiment, the plurality of vacuum chambers 302 may include, but is not limited to, at least one receiver chamber 302-1, a plurality of seed chambers 302-2 disposed below the at least one receiver chamber 302-1, and a plurality of boiling chambers 302-3 disposed below the plurality of seed chambers 302-2. The at least one receiver chamber 302-1, the plurality of seed chambers 302-2, and the plurality of boiling chambers 302-3 may be operated at a first vapor pressure, a second vapor pressure, and a third vapor pressure, respectively. In an embodiment, a value of the second vapor pressure is higher than a value of the third vapor pressure. The first vapor pressure may be in a range of 100 mBar to 120 mBar. The second vapor pressure may be in a range of 160 mBar to 180 mBar. Further, the third vapor pressure may be in a range of 210 mBar to 250 mBar.

In an embodiment, a value of the second vapor pressure may be higher than a value of the third vapor pressure. In an implementation, the value of the second vapor pressure may be in a range of 160 mBar to 180 mBar and, the value of the first vapor pressure may be approximately equal to 100 mBar. The at least one receiver chamber 302-1, the plurality of seed chambers 302-2, the plurality of boiling chambers 302-3 may be in fluid communication with each other via a liquor conduit 304. In the illustrated embodiment, the liquor conduit 304 may be positioned outside of the cylindrical housing 202 and extends in a vertical direction along a length L of the cylindrical housing 202. The liquor conduit 304 may be provided with an inlet valve 304-1 corresponding to each the receiver chamber 302-1. The inlet valve 304-1 may be adapted to regulate a flow of the feed solution from the liquor conduit 304 to the receiver chamber 302-1. Further, the liquor conduit 304 may be provided with a plurality of bypass inlet valves 304-2 adapted to allow a flow of liquor from one vacuum chamber to another vacuum chamber through the liquor conduit 304. In an embodiment, the inlet valve 304-1 and the plurality of bypass inlet valves 304-2 may be in communication with a controlling unit (not shown) and configured to be operated by the controlling unit.

In the illustrated embodiment, the at least one receiver chamber 302-1 may interchangeably be referred to as the receiver chamber 302-1, without departing from the scope of the present disclosure. The receiver chamber 302-1 may be adapted to receive a feed solution through the liquor conduit 304. The feed solution may be embodied as a Concentrated Fine Liquor (CFL), without departing from the scope of the present disclosure. The CFL may include, but is not limited to, a concentrated filtered Thick Juice (TJ) and (C-affinated remelt sugar or A/B Run off Liquor in case of beet sugar plant). In an embodiment, the feed solution received in the receiver chamber 302-1 may include sugar content in a range of 75 °Brix to 78 °Brix at a temperature of 100 - 106 ° C. Further, the CFL received in the receiver chamber 302-1 may be concentrated to a saturation point for adding slurry.

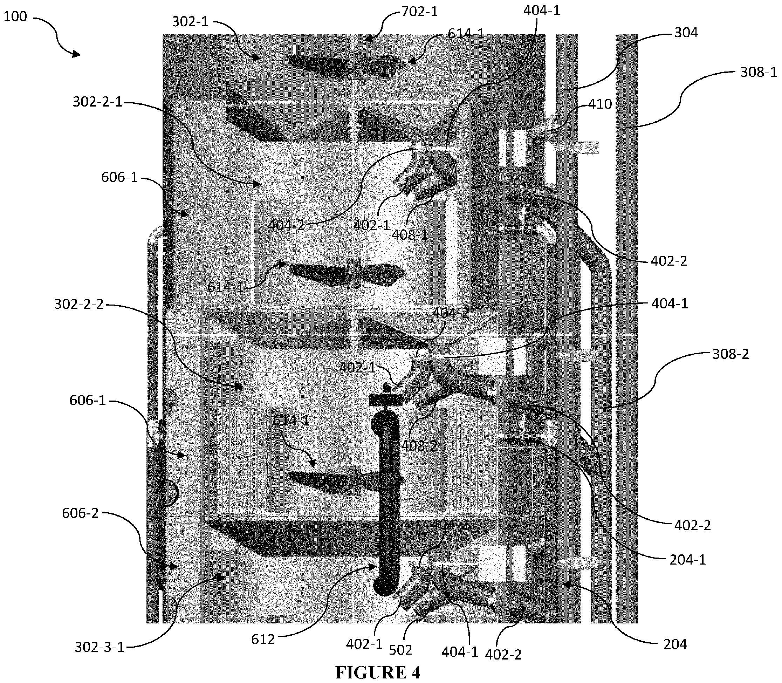

**Figure 4** illustrates a partial sectional view of the continuous vacuum crystallizer depicting the receiver chamber 302-1 and the plurality of seed chamber 302-2, according to an embodiment of the present disclosure. Referring to Figure 4, the receiver chamber 302-1 may include, but is not limited to, an outlet conduit 402-1 and a bypass conduit 402-2. Each of the outlet conduit 402-1 and the bypass conduit 402-2 may be disposed at a bottom end of the receiver chamber 302-1. The bypass conduit 402-2 may be adapted to be in fluid communication with the liquor conduit 304. The bypass conduit 402-2 may be adapted to allow a flow of the CFL from the receiver chamber 302-1 to the liquor conduit 304. The bypass conduit 402-2 may be provided with an outlet bypass valve 404-1 adapted to regulate the flow of the CFL from the receiver chamber 302-1 to the liquor conduit 304. In an embodiment, the outlet bypass valve 404-1 may be electronically operated via the controlling unit (not shown) to regulate the flow of the CFL to the liquor conduit 304 from the receiver chamber 302-1.

Further, the outlet conduit 402-1 may be adapted to allow a flow of the CFL from the receiver chamber 302-1 to at least one the plurality of seed chambers 302-2 disposed below the receiver chamber 302-1. The outlet conduit 402-1 may be provided with an outlet valve 404-2 adapted to regulate the flow of the CFL from the receiver chamber 302-1 to at least one of the plurality of seed chambers 302-2. **In** an embodiment, the outlet valve 404-2 may be electronically operated via the controlling unit to regulate the flow of the CFL to at least one of the plurality of seed chambers 302-2 from the receiver chamber 302-1. Further, referring to Figure 3, a vapor outlet conduit 305 may be connected to the receiver chamber 302-1 and adapted to receive a flow of vapor generated by flush during the feeding of liquor to the receiver chamber 302-1. The vapor outlet conduit 305 may be provided with an outlet valve 305-1 adapted to regulate the flow of vapor from the receiver chamber 302-1 to the vapor outlet conduit 305.

As mentioned earlier, the plurality of seed chambers 302-2 may be coaxially disposed below the receiver chamber 302-1. In the illustrated embodiment, the plurality of seed chambers 302-2 may include, but is not limited to, a pair of seed chambers 302-2, without departing from the scope of the present disclosure. The pair of seed chambers 302-2 may individually be referred to as a first seed chamber 302-2-1 and a second seed chamber 302-2-2. The first seed chamber 302-2-1 may be coaxially disposed below the receiver chamber 302-1. The first seed chamber 302-2-1 may be in fluid communication with the liquor conduit 304.

Further, the first seed chamber 302-2-1 may receive the CFL from the outlet conduit 402-1. Further, the second seed chamber 302-2-2 may be coaxially disposed below the first seed chamber. The second seed chamber 302-2-2 may be in fluid communication with the liquor conduit 304. **In** the illustrated embodiment, the second seed chamber 302-2-2 may receive the CFL from the liquor conduit 304 through an inlet conduit 408-2. Each of the inlet conduit 408-1 and the inlet conduit 408-2 may be provided with an inlet valve 410 adapted to regulate the flow of CFL from the liquor conduit 304 to corresponding seed chambers 302-2. Each of the first seed chamber 302-2-1 and the second seed chamber 302-2-2 may be adapted to receive the saturated CFL from the receiver chamber 302-1 for further processing which is explained in the later sections of the present disclosure. Each of the first seed chamber 302-2-1 and the second seed chamber 302-2-2 may be adapted to simultaneously convert the saturated CFL to mother liquor by adding seed in the feed solution, i.e., the saturated CFL, received from the receiver chamber 302-1.

In the illustrated embodiment, similar to the receiver chamber 302-1, each of the plurality of seed chambers may also include the outlet conduit 402-1 and the bypass conduit 402-2. The bypass conduit 402-2 of each of the first seed chamber 302-2-1 and the second seed chamber 302-2-2 may be adapted to be in fluid communication with the liquor conduit 304. The bypass conduit 402-2 may be adapted to allow the mother liquor from each of the first seed chamber 302-2-1 and the second seed chamber 302-2-2 to the liquor conduit 304. Further, the outlet conduit 402-1 of the first seed chamber 302-2-1 may be adapted to allow a flow of the mother liquor from the first seed chamber 302-2-1 to the second seed chamber 302-2-2. Similarly, the outlet conduit 402-1 of the second seed chamber 302-2-1 may be adapted to allow a flow of the mother liquor from the second seed chamber 302-2-2 to one of the plurality of boiling chambers 302-3 disposed below the second seed chamber 302-2-2.

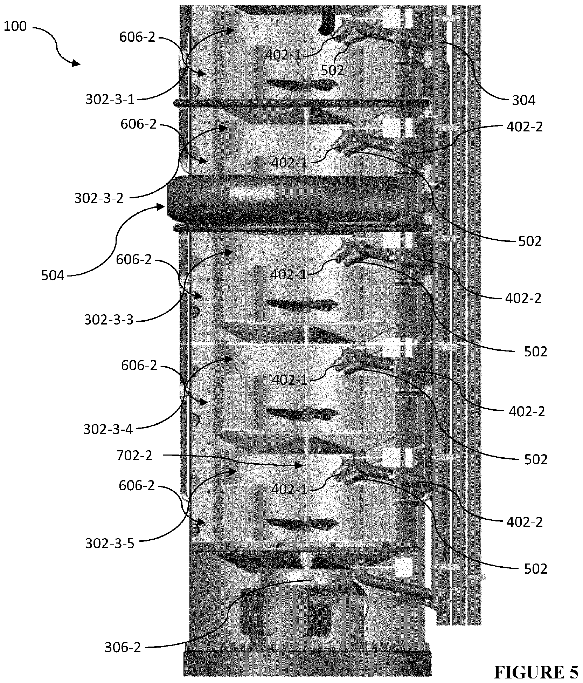

**Figure 5** illustrates a partial sectional view of the continuous vacuum crystallizer 100 depicting the plurality of boiling chambers 302-3, according to an embodiment of the present disclosure. Each of the plurality of boiling chambers 302-3 may be adapted to convert the mother liquor into massecuite which is continuously cascaded down to a succeeding boiling chamber from among the plurality of boiling chambers 302-3. In the illustrated embodiment, the plurality of boiling chamber 302-3 may include, but is not limited to, a boiling chamber 302-3-1, a boiling chamber 302-3-2, a boiling chamber 302-3-3, a boiling chamber 302-3-4, and a boiling chamber 302-3-5. The boiling chamber 302-3-1 may be positioned below the second seed chamber 302-2-2. Further, the boiling chamber 302-3-2 may be positioned below the boiling chamber 302-3-1. The boiling chamber 302-3-3 may be positioned below the boiling chamber 302-3-2. Similarly, the boiling chamber 302-3-4 and the boiling chamber 302-3-5 may be positioned below the boiling chamber 302-3-3 and the boiling chamber 302-3-4, respectively.

Each of the plurality of boiling chambers 302-3 may be in fluid communication with the liquor conduit 304 through an inlet conduit 502 and outlet 402. In an embodiment, similar to inlet conduits 408-1, 408-2 of the pair of seed chambers 302-2, the inlet conduit 502 may be provided with the inlet valve 410 adapted to allow a flow of liquor from the liquor conduit 304 to corresponding boiling chamber 302-3. The inlet valve 410 may be in communication with the controlling unit and configured to be operated by the controlling unit. In the illustrated embodiment, similar to the plurality of seed chambers 302-2, each of the boiling chambers 302-3 may include the outlet conduit 402-1 and the bypass conduit 402-2. The bypass conduit 402-2 of each of the boiling chambers 302-3 may be adapted to be in fluid communication with the liquor conduit 304. The bypass conduit 402-2 may be adapted to allow the massecuite from each of the plurality of boiling chambers 302-3 to the liquor conduit 304. Further, the outlet conduit 406 of each of the plurality of boiling chambers 302-3 may be adapted to allow a flow of the massecuite to a successive boiling chamber 302-3.

**Figure 6** illustrates a top sectional view of the continuous vacuum crystallizer 100 depicting at least one vacuum chamber 302 for crystallization of sugar, according to an embodiment of the present disclosure. **Figure 7** illustrates an isometric sectional view of the continuous vacuum crystallizer 100 depicting at least one vacuum chamber 302, according to an embodiment of the present disclosure. Referring to Figure 6 and Figure 7, the continuous vacuum crystallizer 100 includes, but is not limited to, a plurality of calandrias 602 disposed within the plurality of vacuum chambers 302, such as the pair of seed chambers 302-2 and the plurality of boiling chambers 302-3.

In an embodiment, each of the plurality of calandrias 602 is adapted to heat the mother liquor. Each of the plurality of calandrias 602 is adapted to receive a flow of steam through a plurality of openings 604 located around each of the plurality of calandrias 602. In an embodiment, the plurality of calandrias 602 may individually be referred to as the calandria 602, without departing from the scope of the present disclosure. Each of the plurality of calandrias 602 may be embodied as an evaporator and, includes, but is not limited to, a plurality of tubes, without departing from the scope of the present disclosure.

In the illustrated embodiment, the saturated CFL received in the pair of seed chambers 302-2 may be simultaneously heated in the calandria 602 of each of the pair of seed chambers 302-2. The calandria 602 of each of the pair of seed chambers 302-2 may heat the saturated CFL in presence of the flow of steam and thereby, converting the flow of steam into a flow of vapor. Further, the calandria of the boiling chamber 302-3-1 may receive the mother liquor from the second seed chamber 302-2-2. The mother liquor may be heated in the calandria 602 of the boiling chamber 302-3-1 in presence of the flow of steam received through the plurality of openings 604.

In the boiling chamber 302-3-1, the mother liquor may be heated in the calandria 602 and thereby, converting the mother liquor in the massecuite which is further cascaded down to the subsequent boiling chambers 302-3. In the boiling chamber 302-3-2, the massecuite may be received and subsequently heated in the calandria 602 of the boiling chamber 302-3-2. Further, the massecuite from the boiling chamber 302-3-2 may be cascaded down to the calandria 602 of the boiling chamber 302-3-3. Similarly, the massecuite may be cascaded down to the remaining boiling chambers 302-3-3, 302-3-4, 302-3-5 and heated in the calandria 602 of the remaining boiling chambers 302-3-3, 302-3-4, 302-3-5. The calandria 602 of each of the plurality of boiling chambers 302-3 may heat the massecuite in presence of the flow of steam and thereby, converting the flow of steam into a flow of vapor.

Referring to Figure 6 and Figure 7, the cylindrical housing 202 includes at least one inlet passage 605 adapted to receive a flow of steam and at least one outlet passage 606 adapted to receive a flow of vapor. In an embodiment, the plurality of vacuum chambers 302, such as the plurality of seed chambers 302-2 and the plurality of boiling chambers 302-3, is in fluid communication with each of the at least one inlet passage 605 and the at least one outlet passage 606.

Each of the at least one inlet passage 605 and the at least one outlet passage 606 may be defined between an inner wall 608 of the cylindrical housing 202 and an outer wall 610 of the cylindrical housing 202. In the illustrated embodiment, the cylindrical housing 202 may include a plurality of inlet passages 605 defined circumferentially between the inner wall 608 and the outer wall 610 of the cylindrical housing 202. The plurality of inlet passages 605 may vertically extend from one of the pair of seed chambers 302-2 to the boiling chamber 302-3-5 disposed at the bottom portion 202-2 of the cylindrical housing 202.

Each of the plurality of inlet passages 605 may be adapted to equally distribute the flow of steam to each of the pair of seed chambers 302-2 and each of the plurality of boiling chambers 302-3. In the illustrated embodiment, each of the pair of seed chambers 302-2 and each of the plurality of boiling chambers 302-3 may be provided with the plurality of openings 604 adapted to receive the flow of steam from the plurality of inlet passages 605. In particular, the plurality of openings 604 is in fluid communication with the plurality of inlet passages 605. The flow of steam may be received by each of the pair of seed chambers 302-2 and each of the plurality of boiling chambers 302-3 through the plurality of openings 604 at a same time.

Further, in the illustrated embodiment, the cylindrical housing 202 may include a first set of outlet passages 606-1 positioned circumferentially around the pair of seed chambers 302-2. The first set of outlet passages 606-1 may be adapted to circulate the flow of vapor at the second vapor pressure between each of the pair of seed chambers 302-2, such as the first seed chamber 302-2-1 and the second seed chamber 302-2-2. Further, the cylindrical housing 202 may include a second set of outlet passages 606-2 positioned circumferentially around the plurality of boiling chambers 302-3. The second set of outlet passages 606-2 may be adapted to circulate the flow of vapor at the third vapor pressure between each of the plurality of boiling chambers 302-3.

**In** an embodiment, the continuous vacuum crystallizer 100 may include, but is not limited to, a plurality of vapor outlets 612 adapted to connect the one of the pair of seed chambers 302-2 and one of the plurality of boiling chambers 302-3 disposed below the corresponding seed chamber 302-2. Referring to Figure 4 and Figure 6, in the illustrated embodiment, the plurality of vapor outlets 612 may be circumferentially distributed around the cylindrical housing 202 of the continuous vacuum crystallizer 100. Each of the plurality of vapor outlets 612 may be adapted to connect the second seed chamber 302-2-2 and the boiling chamber 302-3-1.

As mentioned earlier, the first seed chamber 302-2-1 and the second seed chamber 302-2-2 may be operated at the same vapor pressure, i.e., the second vapor pressure, and each of the plurality of boiling chambers 302-3 may be operated at the same vapor pressure, i.e., the third vapor pressure. The plurality of vapor outlets 612 may be adapted to supply vapor from one of the pair of seed chambers 302-2 to one of the plurality of boiling chambers 302-3 to maintain lower vapor pressure in the plurality of boiling chambers 302-3 through at least one control valve 613. In particular, the plurality of vapor outlet 612 may supply vapor from the second seed chamber 320-2-1 to the boiling chamber 302-3-1 in order to maintain vapor pressure in the plurality of boiling chambers 302-3 lower than vapor pressure in the plurality of seed chambers 302-2. Each of the plurality of vapor outlets 612 may be provided with at least one control valve 613 adapted to control the flow of vapor from the second seed chamber 302-2-1 to the boiling chamber 302-3-1.

Further, referring to Figure 2, Figure 4, Figure 5, and Figure 6, the continuous vacuum chamber 302 may include a conduit 204 in fluid communication with each of the plurality of boiling chambers 302-3 and the pair of seed chambers 302-2. The conduit 204 may be adapted to expel Non-Condensable Gas (NCG) from each of the plurality of boiling chambers 302-3 and the pair of seed chambers 302-2. In an embodiment, the conduit 204 may be provided with a plurality of outlet valve 204-1 corresponding to each of the pair of seed chambers 302-2 and each of the plurality of boiling chambers 302-3. The plurality of outlet valve 204-1 may be adapted to allow a flow of NCG from the plurality of boiling chambers 302-1 and the pair of seed chambers 302-2 to the conduit 204. The outlet valve 204-1 may be in communication with the controlling unit and configured to be operated by the controlling unit. The flow of steam supplied to each of the plurality of boiling chambers 302-3 and the pair of seed chambers 302-2 may condense after transferring heat to the mother liquor. However, at least a portion of the flow of steam may remain in a gaseous form, i.e., NCG, including, but not limited to, Nitrogen gas (N₂), Oxygen gas (O₂), and other minor gas. The NCG may be expelled from a top portion of the calandria 602 in each of the plurality of boiling chambers 302-3 and each of the pair of seed chambers 302-2 through the conduit 204. In an embodiment, an NCG Fan (Blower) (not shown) may be connected to the conduit 204 to draw the NCG from each of the plurality of boiling chambers 302-3 and each of the pair of seed chambers 302-2.

Referring to Figure 3, Figure 6, and Figure 7, the continuous vacuum crystallizer 100 includes a plurality of agitators 614 disposed within the plurality of vacuum chambers 302. The plurality of agitators 614 is coupled to at least one shaft 702 adapted to be driven by at least one driving member 306 (as shown in Figure 3) disposed at one of the top portion 202-1 of the cylindrical housing 202 and the bottom portion 202-2 of the cylindrical housing 202. In the illustrated embodiment, the at least one shaft 702 includes, but is not limited to, a first shaft 702-1 and a second shaft 702-2.

The first shaft 702-1 may be adapted to be drivably coupled to a first driving member 306-1 disposed at the top portion 202-1 of the cylindrical housing 202. The first shaft 702-1 is adapted to drive a first set of agitators 614-1 from among the plurality of agitators 614 disposed within the at least one receiver chamber 302-1, the pair of seed chambers 302-2, and at least one of the plurality of boiling chambers 302-3. The second shaft 702-2 may be adapted to be drivably coupled to a second driving member 306-2 disposed at the bottom portion 202-2 of the cylindrical housing 202. The second shaft 702-2 is adapted to drive a second set of agitators 614-2 from among the plurality of agitators 614 disposed within at least one of the plurality of boiling chambers 302-3.

Referring to Figure 3, Figure 4, and Figure 5, in an embodiment, the continuous vacuum crystallizer 100 may include, but is not limited to, a first overflow conduit 308-1, a second overflow line 308-2, and a third overflow line 308-3. The first overflow conduit 308-1 may be in fluid communication with the at least one receiver chamber 302-1. The second overflow line 306-2 may be in fluid communication with each of the pair of seed chambers 302-2. Further, the third overflow line 308-3 may be in fluid communication with each of the plurality of boiling chambers 302-3. Each of the first overflow conduit 308-1, the second overflow conduit 308-2, and the third overflow conduit 308-3 may be adapted to collect an excess amount of mother liquor from each of the plurality of vacuum chambers 302. The receiver chamber 302-1 may be adapted to receive the collected mother liquor for further processing explained earlier in the present disclosure. In an embodiment, the collected mother liquor may be collected in a sealed tank from each of the first overflow conduit 308-1, the second overflow conduit 308-2, and the third overflow conduit 308-3. Further, in such an embodiment, the collected mother liquor may be pumped from the sealed tank to the receiver chamber 302-1.

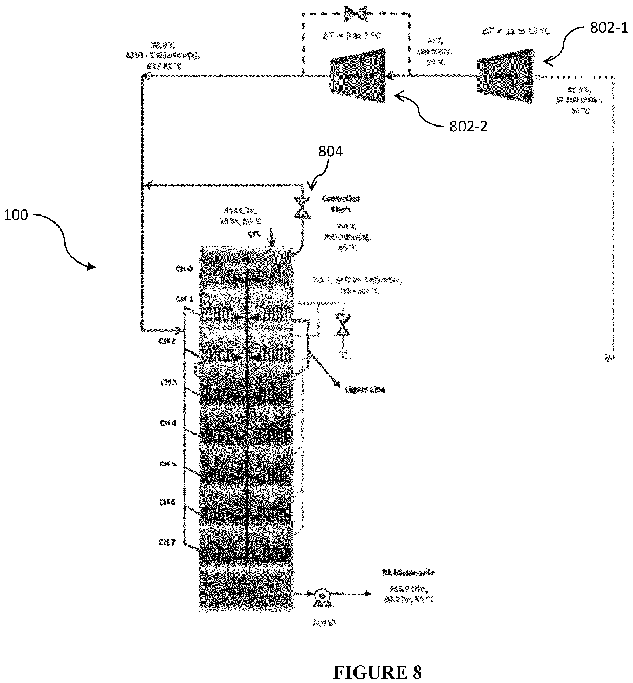

**Figure 8** illustrates a schematic view of an environment depicting re-circulation of steam to the continuous vacuum crystallizer 100, according to an embodiment of the present disclosure. In an embodiment, the flow of vapor from each of the plurality of vacuum chambers 302, such as the receiver chamber 302-1, the pair of seed chambers 302-2, and the plurality of boiling chambers 302-3, is collected in one header (not shown) and then been re-compressed to generate the flow of steam which is fed to each of the plurality of vacuum chambers 302 through the plurality of openings 604.

The first set of outlet passages 606-1 and the second set of outlet passages 606-2 may be adapted to be in fluid communication with a vapor circulation network 800. Referring to Figure 8, the vapor circulation network 800 may include, but is not limited to, at least one Mechanical Vapor Re-compressor (MVR) 802 adapted to receive the flow of vapor from the pair of seed chambers 302-2 and the plurality of boiling chambers 302-3. The at least one MVR 802 may be adapted to generate a flow of steam by re-compressing the flow of vapor received from the pair of seed chambers 302-2 and the plurality of boiling chambers 302-3.

Referring to Figure 8, in the illustrated embodiment, the at least one MVR 802 may include a first MVR 802-1 and a second MVR 802-2 positioned downstream to the first MVR 802-1. The first MVR 802-1 may be adapted to receive the flow of vapor from the pair of seed chambers 302-2 and the plurality of boiling chambers 302-3. The first MVR 802-1 may re-compress the received flow of vapor to generate a flow of steam which is further supplied to the second MVR 802-2. The second MVR 802-2 may be adapted to re-compress the flow of steam to generate a flow of steam at higher pressure which is to be supplied to the plurality of vacuum chambers 302. In an example, the first MVR 802-1 may receive the flow of vapor at pressure and temperature of approximately 100 mBar and 46 °C. In such an example, the first MVR 802-1 may re-compress the flow of vapor to generate the flow of steam at pressure and temperature of approximately 190 mBar and 59 °C. Further, the second MVR 802-2 may receive the flow of steam and subsequently, re-compresses the flow of steam to generate a flow of steam at a pressure in a range of 210 mBar to 250 mBar and at a temperature in a range of 62 °C to 65 °C. In an embodiment, a sugar content of the massecuite and a temperature associated with the massecuite generated in the continuous vacuum crystallizer 100 can be varied based on the pressure of the flow of steam supplied to the plurality of vacuum chambers 302.

Referring to Figure 5, Figure 6, and Figure 8, the continuous vacuum crystallizer 100 may include, but is not limited to, a conduit 504 in fluid communication with the at least one MVR 802 and adapted to supply the flow of steam from the at least one MVR 802 to each of the pair of seed chambers 302-2 and each of the plurality of boiling chambers 302-3. The conduit 504 may be circumferentially positioned on the outer wall 610 of the cylindrical housing 202. The conduit 504 may be adapted to be in fluid communication with each of the plurality of inlet passages 605 to supply the flow of steam received from the at least one MVR 802.

Further, referring to Figure 8, the flow of vapor generated within the receiver chamber 302-1 may be transferred to the conduit 504 for feeding the flow of steam to the plurality of boiling chambers 302-3 and the pair of seed chambers 302-2. In the illustrated embodiment, a control valve 804 may be provided to ensure the flow of vapor in only one direction, i.e., from the receiver chamber 320-1 to the conduit 504. The control valve 804 may restrict the flow of steam generated by the at least one MVR 802 to the receiver chamber 302-1.

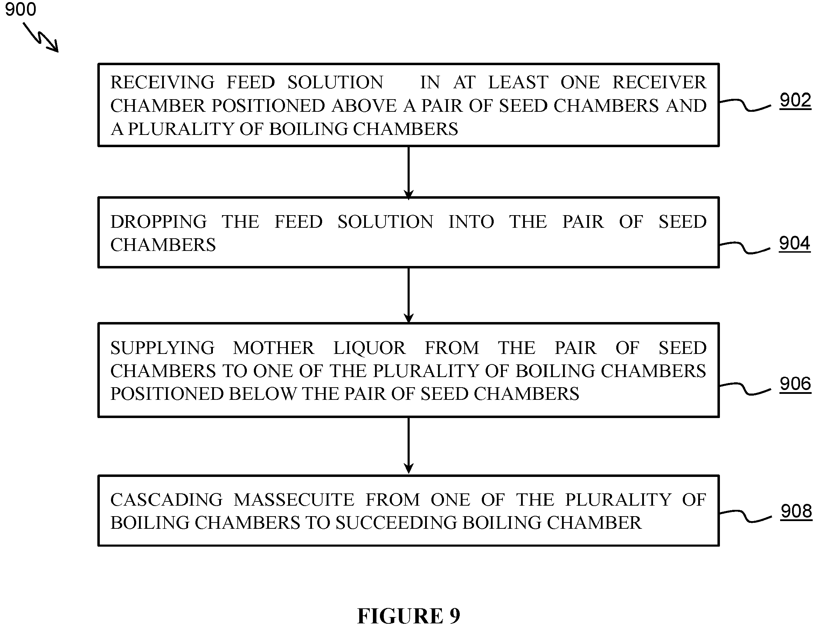

**Figure** 9 illustrates a flowchart depicting a method 900 of crystallizing sugar in the continuous vacuum crystallizer 100, according to an embodiment of the present disclosure. The method 900 is performed by the continuous vacuum crystallizer 100. For the sake of brevity, features of the continuous vacuum crystallizer that are already explained in detail in the description of Figure 1, Figures 2, Figure 3, Figures 4, Figure 5, Figure 6, Figure 7, and Figures 8 are not explained in detail in the description of Figures 9.

At block 902, the method 900 includes receiving the feed solution, such as the CFL, in the at least one receiver chamber 302-1 positioned above the pair of seed chambers 302-2 and the plurality of boiling chambers 302-3. The at least one receiver chamber 302-1, the pair of seed chambers 302-2, and the plurality of boiling chambers 302-3 are coaxially stacked in the cylindrical housing 202 over each other. In an embodiment, the feed solution may be received in the at least one receiver chamber 302-1 at 106 ° C and having sugar content of approximately 76 °Brix. In such an embodiment, the feed solution may be flashed by a vacuum of 0.25 bar to a temperature of approximately 68 ° C. During the flash evaporation of the feed solution, a flow of vapor may be generated within the at least one receiver chamber 302-1. The flow of vapor from the at least one receiver chamber 302-1 may be transferred to the conduit 504 for feeding the flow of vapor to the plurality of boiling chambers 302-3 and the pair of seed chambers 302-2.

At block 904, the method 900 includes dropping the feed solution into the pair of seed chambers 302-2. The feed solution is saturated by adding seed while dropping the feed solution in one of the pair of seed chambers 302-3 from the at least one receiver chamber 302-1. The feed solution having sugar content in a range of 75 °Brix to 78 °Brix is received in the at least one receiver chamber at a temperature of 100-106 ° C.

At block 906, the method 900 includes supplying the mother liquor from the pair of seed chambers 302-2 to one of the plurality of boiling chambers 302-3 positioned below the pair of seed chambers 302-2. In the pair of seed chambers 302-2, the feed solution may be converted to the mother liquor by adding slurry. Further, the mother liquor may be fed to the plurality of boiling chambers 302-3. The mother liquor is converted into the massecuite within the plurality of boiling chambers 302-3.

At block 908, the method 900 includes cascading the massecuite from one of the plurality of boiling chambers 302-3 to the succeeding boiling chamber. For example, the massecuite may be cascaded from the boiling chamber 302-3-1 to the boiling chamber 302-3-2. Similarly, the massecuite may be cascaded down to a last boiling chamber, i.e., the boiling chamber 302-3-5. A concentration of the massecuite is increased in the succeeding boiling chamber compared to a concentration of the massecuite received from preceding boiling chamber from among the plurality of boiling chambers 302-3. The flow of steam is supplied to each of the plurality of boiling chambers. In an embodiment, the method 900 includes equally distributing the flow of steam to each of the pair of seed chambers 302-2 and each of the plurality of boiling chambers 302-3 through the plurality of openings 604 at the same time. The plurality of openings 604 may be located around each of the plurality of calandrias 602 disposed within the pair of seed chambers 302-2 and the plurality of boiling chambers 302-3.

The flow of steam heats the massecuite circulated in the tubes of calandrias 602 which evaporates the water content in this massecuite to be converted in the flow of vapor. The aforesaid flow of vapor is collected in one header and then been re-compressed to generate the flow of steam. The re-compressed flow of steam is fed to each of the plurality of boiling chambers 302-3 and the pair of seed chambers 302-2. In an embodiment, the method 900 includes receiving, by the at least one Mechanical Vapor Re-compressor (MVR) 802, the flow of vapor from the pair of seed chambers 302-2 and the plurality of boiling chambers 302-3. The method 900 includes re-compressing the flow of vapor by the at least one MVR 802 to generate the flow of steam. Further, the method 900 includes supplying the flow of steam from the at least one MVR 802 to each of the pair of seed chambers 302-2 and each of the plurality of boiling chambers 302-3. In an embodiment, the massecuite may increase in concentration from the boiling chamber 302-3-1 to the boiling chamber 302-3-5, where each of the boiling chambers 302-3 may be working under a vacuum of approximately 100 mBar and in presence of the re-compressed flow of steam having pressure of approximately 250 mBar. Therefore, the flow of steam at higher pressure may be fed as a heating medium to the pair of seed chambers 302-2 and the plurality of boiling chambers 302-3.

In an embodiment, the method 900 includes circulating the flow of vapor at the second vapor pressure between each of the pair of seed chambers 302-2 through the first set of outlet passages 606-1. The first set of outlet passages 606-1 may be positioned circumferentially around the pair of seed chambers 302-2. The method 900 includes circulating the flow of vapor at the third vapor pressure between each of the plurality of boiling chambers 302-3 through the second set of outlet passages 606-2. The second set of outlet passages 606-2 may be positioned circumferentially around the plurality of boiling chambers 302-3. Further, the method 900 includes supplying vapor, through the plurality of vapor outlets 612, from one of the pair of seed chambers 302-2 to one of the plurality of boiling chambers 302-3 to maintain lower vapor pressure in the plurality of boiling chambers 302-3. The plurality of vapor outlets 612 may be adapted to connect the one of the pair of seed chambers 302-2 and one of the plurality of boiling chambers 302-3 disposed below the corresponding seed chamber.

The method 900 includes collecting the massecuite from one of the plurality of boiling chambers 302-3 disposed at the bottom portion 202-2 of the cylindrical housing 202. The temperature of the massecuite is in a range of 52 ° C to 69 ° C based on the pressure of the flow of steam supplied to each of the pair of seed chambers 302-2 and each of the plurality of boiling chambers 302-3. Further, the sugar content of the massecuite is in a range of 89.3 to 90.97 °Brix based on the pressure of the flow of steam supplied to each of the pair of seed chambers 302-2 and each of the plurality of boiling chambers 302-3. In an embodiment, upon collecting the massecuite from the continuous vacuum crystallizer 100, the collected massecuite may be supplied to a cooling vacuum crystallizer (not shown) which operates under pressure of approximately 50 bar and without using heating steam (flash crystallization) in order to attain higher crystal growth and yield from the massecuite. Further, condensates, such as contaminated condensates and vapor condensates, may be collected from each of the plurality of vacuum chamber 302 and subsequently, transferred to a common process hot water network. In one embodiment, in the common process hot water network, the contaminated condensates may be used to melt the raw sugar in cane sugar refineries. In another embodiment, in the common process hot water network, the contaminated condensates may be used to wash the sugar beets in beet sugar industries.

Table 1 illustrates various parameters associated with the continuous vacuum crystallizer 100 based on exemplary pressure of the flow of steam supplied to the plurality of vacuum chambers 302, according to an embodiment of the present disclosure. It should be appreciated by a person skilled in the art that Table 1 is included to provide a better understanding of the present disclosure and therefore, should not be construed as limiting.

**Table 1**

| **Parameter** | **Steam Inlet pressure 250 mbar a** | **Steam Inlet pressure 470 mbar a** | **Steam Inlet pressure 550 mbar a** |
|---|---|---|---|
| **Refined sugar T/h** | 350.17 | 350.17 | 350.17 |
| **Vacuum pressure mbar a** | 109 | 190 | 224 |
| **Massecuite temperature ° C** | 52 | 65 | 69 |
| **ΔT between Steam & Vapor ° C** | 17.5 | 21 | 21.6 |
| **Massecuite brix %** | 89.3 | 90.61 | 90.97 |
| **Massecuite crystal content %** | 58.6 | 59.5 | 59.7 |
| **Total Evaporation T/h** | 45.39 | 51.19 | 52.82 |
| **Steam Quantities T/h** | 37.97 | 45.85 | 48.33 |

As would be gathered, the present disclosure offers the continuous vacuum crystallizer 100 and the method 900 of crystallizing sugar. The continuous vacuum crystallizer 100 may be employed in industries, such as beet sugar industry and cane sugar industry, for crystallization of sugar. Therefore, the continuous vacuum crystallizer 100 has a wide range of applications. As explained earlier, the continuous vacuum crystallizer 100 includes the plurality of agitators 614 adapted to be driven by the first driving member 306-1 and the second driving member 306-2. Further, the continuous vacuum crystallizer 100 includes the first shaft 702-1 coupled to the first driving member 306-1 and the first set of agitators 614-1. Further, the continuous vacuum crystallizer 100 includes the second shaft 702-2 coupled to the second driving member 306-2 and the second set of agitators 614-2.

Owing to such an arrangement, the plurality of agitators 614 can be operated by the first driving members 306-1 and the second driving members 306-1 and thereby, eliminating the requirement of separate driving members for each of the plurality of agitators 614. This substantially reduces overall sub-components in the continuous vacuum crystallizer 100 and the overall power consumption of the continuous vacuum crystallizer 100. Further, the continuous vacuum crystallizer 100 eliminates the requirement of a separate controlling unit for each of the plurality of vacuum chambers 302. For instance, in the continuous vacuum crystallizer 100, a single controlling unit can control operation of the plurality of vacuum chambers 302 in synchronization.

Further, as explained earlier, the plurality of boiling chambers 302-3 may be operated at a same vapor pressure, i.e., the third vapor pressure. Further, same heating steam may be circulated between each of the boiling chambers 302-3 through the plurality of inlet passages 605. This results equal distribution of heating steam to the plurality of calandria in the plurality of boiling chambers 302-3. Owing to such circulation of the steam, the overall consumption of steam and energy are substantially reduced. Further, substantially low ΔT, i.e., a difference between a temperature of steam and a temperature of vapor, in the plurality of boiling chambers 302-3 may be attained which further results in low energy consumption and low incrustation.

Furthermore, the plurality of boiling chambers 302-3 may be in fluid communication with each other. In the continuous vacuum crystallizer 100, the massecuite may be cascaded down from the boiling chamber 320-3-1 to the subsequent boiling chambers. The continuous vacuum crystallizer 100 eliminates mixing and/or circulation of a new magma with an old magma within the plurality of boiling chambers 302-3. This results in overall low temperature operation in the plurality of boiling chamber 302-3 which leads to the highest sugar product quality in terms of low coefficient of variation "CV" and improved sugar color and temperature. Owing to improved sugar color and temperature associated with sugar obtained from the continuous vacuum crystallizer 100, further processing of the sugar is substantially eliminated which results in low production cost and energy consumption. The aforesaid arrangement also increases the overall heating surface area which comes in contact with the mother liquor in each of the plurality of boiling chambers 302-3. This results in substantially higher extraction of sugar content from the mother liquor.

As explained earlier, the flow of vapor received from the plurality of vacuum chambers 302 may be re-compressed by the plurality of MVRs 802 to generate the flow of steam at a pressure of approximately 350 mBar which is fed again to the plurality of boiling chambers 302-3 and the pair of seed chambers 302-2. Owing to the implementation of recompressed vapor, the pair of seed chambers 302-2 and the plurality of boiling chambers 302-3 may be adapted to be operated under low temperature and low pressure which further results in the extraction of a maximum amount of sugar from the mother liquor. Further, the continuous vacuum crystallizer 100 eliminates the requirement of self-sugar magma (separate batch pans and pump), and vacuum and steam valves. The continuous vacuum crystallizer 100 renders the requirement of a large number of instrument measuring or monitoring tools which results in overall cost reduction and energy consumption. Further, the continuous vacuum crystallizer 100 provides flexibility to isolate the plurality of vacuum chambers for cleaning or to control, such as accelerating/deaccelerating, the operation rate in the continuous vacuum crystallizer 100.

As mentioned earlier, in the continuous vacuum crystallizer 100, less amount of energy is required for sugar separation and drying related to the loose and warm massecuite obtained by working under low temperature crystallization. **In** an implementation, the continuous vacuum crystallizer 100 may produce the high crystal content of approximately 57% may be obtained due to the low temperature of 50 °C - 51 °C of the massecuite having sugar content of approximately 88.6 °Brix. Although, in a conventional crystallizer, the crystal content of 57 % may be obtained but with the massecuite has sugar content of approximately 91 °Brix at a temperature of 73 °C. Therefore, the continuous vacuum crystallizer 100 can recover a maximum amount of sugar from the mother liquor by progressive and controlled boiling/cooling.

Further, energy consumption can be effectively optimized in the continuous vacuum crystallizer 100. Furthermore, the continuous vacuum crystallizer 100 can yield a higher amount of sugar in crystalline form in order to minimize recirculation of the mother liquor which further results in overall energy consumption. Therefore, the continuous vacuum crystallizer 100 and the method 800 of crystallizing the sugar of the present disclosure are efficient, risk-free, in compliance with environmental requirements, flexible in implementation, economical, convenient, and have a wide range of applications.

While specific language has been used to describe the present subject matter, any limitations arising on account thereto, are not intended. As would be apparent to a person in the art, various working modifications may be made to the method in order to implement the inventive concept as taught herein. The drawings and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment. requirement of self-sugar magma (separate batch pans and pump), and vacuum and steam valves. The continuous vacuum crystallizer 100 renders the requirement of a large number of instrument measuring or monitoring tools which results in overall cost reduction and energy consumption. Further, the continuous vacuum crystallizer 100 provides flexibility to isolate the plurality of vacuum chambers for cleaning or to control, such as accelerating/deaccelerating, the operation rate in the continuous vacuum crystallizer 100.

As mentioned earlier, in the continuous vacuum crystallizer 100, less amount of energy is required for sugar separation and drying related to the loose and warm massecuite obtained by working under low temperature crystallization. In an implementation, the continuous vacuum crystallizer 100 may produce the high crystal content of approximately 57% may be obtained due to the low temperature of 50 °C - 51 °C of the massecuite having sugar content of approximately 88.6 °Brix. Although, in a conventional crystallizer, the crystal content of 57 % may be obtained but with the massecuite has sugar content of approximately 91 °Brix at a temperature of 73 °C. Therefore, the continuous vacuum crystallizer 100 can recover a maximum amount of sugar from the mother liquor by progressive and controlled boiling/cooling.

Further, energy consumption can be effectively optimized in the continuous vacuum crystallizer 100. Furthermore, the continuous vacuum crystallizer 100 can yield a higher amount of sugar in crystalline form in order to minimize recirculation of the mother liquor which further results in overall energy consumption. Therefore, the continuous vacuum crystallizer 100 and the method 800 of crystallizing the sugar of the present disclosure are efficient, risk-free, in compliance with environmental requirements, flexible in implementation, economical, convenient, and have a wide range of applications.

## Claims

1. A continuous vacuum crystallizer (100) for crystallization of sugar, the continuous vacuum crystallizer (100) comprising:
a cylindrical housing (202) having at least one inlet passage (605) adapted to receive a flow of steam and at least one outlet passage (606) adapted to receive a flow of vapor;
a plurality of vacuum chambers (302) coaxially stacked in the cylindrical housing (202) over each other, the plurality of vacuum chambers (302) adapted to be in fluid communication with each other and with each of the at least one inlet passage (605) and the at least one outlet passage (606), wherein one of the plurality of vacuum chambers (302) is adapted to receive mother liquor which is cascaded down through each of the plurality of vacuum chambers (302);
a plurality of calandrias (602) disposed within the plurality of vacuum chambers (302) and adapted to heat the mother liquor, wherein each of the plurality of calandrias (602) is adapted to receive the steam through a plurality of openings located around each of the plurality of calandrias (602), wherein the plurality of openings is in fluid communication with the at least one inlet passage (605); and
a plurality of agitators (614) disposed within the plurality of vacuum chambers (302), wherein the plurality of agitators (614) is coupled to at least one shaft adapted to be driven by at least one driving member disposed at one of a top portion of the cylindrical housing (202) and a bottom portion of the cylindrical housing (202), wherein the at least one shaft comprises a first shaft and a second shaft, wherein the first shaft is adapted to drive a first set of agitators (614-1) from among the plurality of agitators (614), and wherein the second shaft is adapted to drive a second set of agitators (614-2) from among the plurality of agitators (614),
wherein the flow of vapor from each of the plurality of vacuum chambers (302) is collected in one header and then been re-compressed to generate the flow of steam which is fed to each of the plurality of vacuum chambers (302) through the plurality of openings.

2. The continuous vacuum crystallizer (100) according to claim 1, wherein the plurality of vacuum chambers (302) includes at least one receiver chamber (302-1), a plurality of seed chambers disposed below the at least one receiver chamber (302-1), and a plurality of boiling chambers (302-3) disposed below the plurality of seed chambers, each of the plurality of boiling chambers (302-3) is adapted to convert the mother liquor into massecuite which is continuously cascaded down to a succeeding boiling chamber from among the plurality of boiling chambers (302-3).

3. The continuous vacuum crystallizer (100) according to claim 2, wherein the at least one receiver chamber (302-1), the plurality of seed chambers, and the plurality of boiling chambers (302-3) are operated at a first vapor pressure, a second vapor pressure, and a third vapor pressure, respectively, a value of the second vapor pressure is higher than a value of the third vapor pressure.

4. The continuous vacuum crystallizer (100) according to claim 2, wherein each of the at least one inlet passage (605) and the at least one outlet passage (606) are defined between an inner wall of the cylindrical housing (202) and an outer wall of the cylindrical housing (202), the at least one inlet passage (605) comprising:
a plurality of inlet passages defined circumferentially between the inner wall and the outer wall of the cylindrical housing (202) and vertically extending from one of a pair of seed chambers to one of the plurality of boiling chambers (302-3) disposed at the bottom portion of the cylindrical housing (202),
wherein each of the plurality of inlet passages is adapted to equally distribute the flow of steam to each of the pair of seed chambers and each of the plurality of boiling chambers (302-3) through the plurality of openings at a same time.

5. The continuous vacuum crystallizer (100) according to any of claims 3 and 4, wherein the at least one outlet passage (606) comprises:
a first set of outlet passages (606-1) positioned circumferentially around the pair of seed chambers and adapted to circulate a flow of vapor at the second vapor pressure between each of the pair of seed chambers; and
a second set of outlet passages (606-2) positioned circumferentially around the plurality of boiling chambers (302-3) and adapted to circulate a flow of vapor at the third vapor pressure between each of the plurality of boiling chambers (302-3).

6. The continuous vacuum crystallizer (100) according to claim 5, further comprising:
a plurality of vapor outlets adapted to connect the one of the pair of seed chambers and one of the plurality of boiling chambers (302-3) disposed below the corresponding seed chamber,
wherein the plurality of vapor outlets is adapted to supply vapor from the one of the pair of seed chambers to the one of the plurality of boiling chambers (302-3) to maintain lower vapor pressure in the plurality of boiling chambers (302-3) through at least one control valve.

7. The continuous vacuum crystallizer (100) according to any of claims 4 and 5, wherein the first set of outlet passages (606-1) and the second set of outlet passages (606-2) are adapted to be in fluid communication with a vapor circulation network comprising:
at least one Mechanical Vapor Re-compressor, MVR, adapted to receive the flow of vapor from the pair of seed chambers and the plurality of boiling chambers (302-3), and adapted to generate a flow of steam by re-compressing the flow of vapor,
wherein a conduit in fluid communication with the at least one MVR and adapted to supply the flow of steam from the at least one MVR to each of the pair of seed chambers and each of the plurality of boiling chambers (302-3), the conduit is circumferentially positioned on the outer wall of the cylindrical housing (202) and is adapted to be in fluid communication with each of the plurality of inlet passages to supply the flow of steam received from the at least one MVR.

8. The continuous vacuum crystallizer (100) according to any of the preceding claims, further comprising:
a first overflow conduit in fluid communication with the at least one receiver chamber (302-1);
a second overflow conduit in fluid communication with each of the pair of seed chambers; and
a third overflow conduit in fluid communication with each of the plurality of boiling chambers (302-3),
wherein each of the first overflow conduit, the second overflow conduit, and the third overflow conduit is adapted to collect excess amount of mother liquor from each of the plurality of vacuum chambers (302), the at least one receiver chamber (302-1) is adapted to receive the collected mother liquor.

9. The continuous vacuum crystallizer (100) according to any of the preceding claims, wherein the first shaft is adapted to be drivably coupled to a first driving member disposed at the top portion of the cylindrical housing (202), wherein the first set of agitators (614-1) from among the plurality of agitators (614) is disposed within the at least one receiver chamber (302-1), the pair of seed chambers, and at least one of the plurality of boiling chambers (302-3); and
the second shaft is adapted to be drivably coupled to a second driving member disposed at the bottom portion of the cylindrical housing (202), wherein the second set of agitators (614-2) from among the plurality of agitators (614) is disposed within at least one of the plurality of boiling chambers (302-3).

10. A method (900) of crystallizing sugar in a continuous vacuum crystallizer (100) according to any of claims 1-9, the method (900) comprising:
receiving feed solution in at least one receiver chamber (302-1) positioned above a pair of seed chambers and a plurality of boiling chambers (302-3), wherein the at least one receiver chamber (302-1), the pair of seed chambers, and the plurality of boiling chambers (302-3) are coaxially stacked in a cylindrical housing (202) over each other;
dropping the feed solution into the pair of seed chambers, wherein the feed solution is saturated by adding slurry while dropping the feed solution in one of the pair of seed chambers from the at least one receiver chamber (302-1);
supplying mother liquor from the pair of seed chambers to one of the plurality of boiling chambers (302-3) positioned below the pair of seed chambers, wherein the mother liquor is converted into massecuite, wherein a plurality of agitators (614) are disposed within each of the plurality of boiling chambers (302-3), wherein the plurality of agitators (614) is coupled to at least one shaft adapted to be driven by at least one driving member disposed at one of a top portion of the cylindrical housing (202) and a bottom portion of the cylindrical housing (202), wherein the at least one shaft comprises a first shaft and a second shaft, wherein the first shaft is adapted to drive a first set of agitators (614-1) from among the plurality of agitators (614), and wherein the second shaft is adapted to drive a second set of agitators (614-2) from among the plurality of agitators (614); and
cascading the massecuite from one of the plurality of boiling chambers (302-3) to succeeding boiling chamber, wherein a concentration of the massecuite is increased in the succeeding boiling chamber compared to a concentration of the massecuite received from preceding boiling chamber from among the plurality of boiling chambers (302-3),
wherein a flow of steam is supplied to each of the plurality of boiling chambers (302-3), the flow of steam is converted in a flow of vapor which is collected in one header and then been re-compressed to generate the flow of steam, the re-compressed flow of steam is fed to each of the plurality of boiling chambers (302-3) and the pair of seed chambers.

11. The method (900) according to claim 10, further comprising equally distributing the flow of steam to each of the pair of seed chambers and each of the plurality of boiling chambers (302-3) through a plurality of openings at a same time, wherein the plurality of openings is located around each of a plurality of calandrias (602) disposed within the pair of seed chambers and the plurality of boiling chambers (302-3).

12. The method (900) according to claim 10, further comprising:
circulating a flow of vapor at a second vapor pressure between each of the pair of seed chambers through a first set of outlet passages (606-1), wherein the first set of outlet passages (606-1) is positioned circumferentially around the pair of seed chambers; and
circulating a flow of vapor at a third vapor pressure between each of the plurality of boiling chambers (302-3) through a second set of outlet passages (606-2), wherein the second set of outlet passages (606-2) is positioned circumferentially around the plurality of boiling chambers (302-3).

13. The method (900) according to any of claims 10 and 12, further comprising:
supplying vapor, through a plurality of vapor outlets, from the one of the pair of seed chambers to the one of the plurality of boiling chambers (302-3) to maintain lower vapor pressure in the plurality of boiling chambers (302-3),
wherein the plurality of vapor outlets is adapted to connect the one of the pair of seed chambers and the one of the plurality of boiling chambers (302-3) disposed below the corresponding seed chamber.

14. The method (900) according to claim 10, further comprising:
receiving, by at least one Mechanical Vapor Re-compressor, MVR, the flow of vapor from the pair of seed chambers and the plurality of boiling chambers (302-3);
re-compressing the flow of vapor by the at least one MVR to generate a flow of steam; and
supplying the flow of steam from the at least one MVR to each of the pair of seed chambers and each of the plurality of boiling chambers (302-3).

15. The method (900) according to claim 10, wherein the feed solution having sugar content in a range of 75 °Brix to 78 °Brix is received in the at least one receiver chamber (302-1) at a temperature of 100 - 106 ° C.

16. The method (900) according to claim 10, further comprising collecting the massecuite from one of the plurality of boiling chambers (302-3) disposed at a bottom portion of the cylindrical housing (202), wherein:
a temperature of the massecuite is in a range of 52 ° C to 69 ° C based on a pressure of a flow of steam supplied to each of the pair of seed chambers and each of the plurality of boiling chambers (302-3); and
a sugar content of the massecuite is in a range of 89.3 °Brix to 90.97 °Brix based on the pressure of the flow of steam supplied to each of the pair of seed chambers and each of the plurality of boiling chambers (302-3).

## Patentansprüche

1. Kontinuierlicher Unterdruckkristallisator (100) zur Kristallisation von Zucker, wobei der kontinuierliche Unterdruckkristallisator (100) umfasst:
ein zylindrisches Gehäuse (202), das mindestens einen Einlasskanal (605), der dafür ausgelegt ist, einen Wasserdampfstrom aufzunehmen, und mindestens einen Auslasskanal (606), der dafür ausgelegt ist, einen Dampfstrom aufzunehmen, aufweist;
mehrere Unterdruckkammern (302), die in dem zylindrischen Gehäuse (202) übereinander koaxial gestapelt sind, wobei die mehreren Unterdruckkammern (302) dafür ausgelegt sind, sich miteinander und mit jedem des mindestens einen Einlasskanals (605) und des mindestens einen Auslasskanals (606) in fluidtechnischer Kommunikation zu befinden, wobei eine der mehreren Unterdruckkammern (302) dafür ausgelegt ist, Mutterlauge zu erhalten, die durch jede der mehreren Unterdruckkammern (302) kaskadenförmig nach unten geführt wird;
mehrere Calandrias (602), die innerhalb der mehreren Unterdruckkammern (302) angeordnet sind und dafür ausgelegt sind, die Mutterlauge zu erhitzen, wobei jede der mehreren Calandrias (602) dafür ausgelegt ist, den Wasserdampf durch mehrere Öffnungen aufzunehmen, die sich um jede der mehreren Calandrias (602) befinden, wobei die mehreren Öffnungen sich in fluidtechnischer Kommunikation mit dem mindestens einen Einlasskanal (605) befinden; und
mehrere Rührvorrichtungen (614), die innerhalb der mehreren Unterdruckkammern (302) angeordnet sind, wobei die mehreren Rührvorrichtungen (614) an mindestens eine Welle gekoppelt sind, die dafür ausgelegt ist, durch mindestens ein Antriebselement angetrieben zu werden, das an einem eines oberen Abschnitts des zylindrischen Gehäuses (202) und eines unteren Abschnitts des zylindrischen Gehäuses (202) angeordnet ist, wobei die mindestens eine Welle eine erste Welle und eine zweite Welle umfasst, wobei die erste Welle dafür ausgelegt ist, einen ersten Satz von Rührvorrichtungen (614-1) aus den mehreren Rührvorrichtungen (614) anzutreiben, und wobei die zweite Welle dafür ausgelegt ist, einen zweiten Satz von Rührvorrichtungen (614-2) aus den mehreren Rührvorrichtungen (614) anzutreiben,
wobei der Dampfstrom von jeder der mehreren Unterdruckkammern (302) in einem Kopfstück gesammelt wird und dann erneut verdichtet wird, um den Wasserdampfstrom zu erzeugen, der durch die mehreren Öffnungen in jede der mehreren Unterdruckkammern (302) eingespeist wird.

2. Kontinuierlicher Unterdruckkristallisator (100) nach Anspruch 1, wobei die mehreren Unterdruckkammern (302) mindestens eine Aufnahmekammer (302-1), mehrere Impfkammern, die unterhalb der mindestens einen Aufnahmekammer (302-1) angeordnet sind, und mehrere Siedekammern (302-3), die unterhalb der mehreren Impfkammern angeordnet sind, wobei jede der mehreren Siedekammern (302-3) dafür ausgelegt ist, die Mutterlauge in Massecuite umzuwandeln, die kontinuierlich kaskadenförmig nach unten in eine nachfolgende Siedekammer unter den mehreren Siedekammern (302-3) geführt wird.

3. Kontinuierlicher Unterdruckkristallisator (100) nach Anspruch 2, wobei die mindestens eine Aufnahmekammer (302-1), die mehreren Impfkammern und die mehreren Siedekammern (302-3) mit einem ersten Dampfdruck, einem zweiten Dampfdruck bzw. einem dritten Dampfdruck betrieben werden, wobei ein Wert des zweiten Dampfdrucks höher ist als ein Wert des dritten Dampfdrucks.

4. Kontinuierlicher Unterdruckkristallisator (100) nach Anspruch 2, wobei jeder des mindestens einen Einlasskanals (605) und des mindestens einen Auslasskanals (606) zwischen einer Innenwand des zylindrischen Gehäuses (202) und einer Außenwand des zylindrischen Gehäuses (202) definiert sind, wobei der mindestens eine Einlasskanal (605) umfasst:
mehrere Einlasskanäle, die zwischen der Innenwand und der Außenwand des zylindrischen Gehäuses (202) umlaufend definiert sind und sich von einer eines Paares von Impfkammern zu einer der mehreren Siedekammern (302-3), die an dem unteren Abschnitt des zylindrischen Gehäuses (202) angeordnet sind, vertikal erstrecken,
wobei jeder der mehreren Einlasskanäle dafür ausgelegt ist, den Wasserdampfstrom gleichzeitig durch die mehreren Öffnungen gleichmäßig auf jede des Paares von Impfkammern und jede der mehreren Siedekammern (302-3) zu verteilen.

5. Kontinuierlicher Unterdruckkristallisator (100) nach einem der Ansprüche 3 und 4, wobei der mindestens eine Auslasskanal (606) umfasst:
einen ersten Satz von Auslasskanälen (606-1), die um das Paar von Impfkammern umlaufend positioniert sind und dafür ausgelegt sind, einen Dampfstrom mit dem zweiten Dampfdruck zwischen jeder des Paares von Impfkammern zirkulieren zu lassen; und
einen zweiten Satz von Auslasskanälen (606-2), die um die mehreren Siedekammern (302-3) umlaufend positioniert sind und dafür ausgelegt sind, einen Dampfstrom mit dem dritten Dampfdruck zwischen jeder der mehreren Siedekammern (302-3) zirkulieren zu lassen.

6. Kontinuierlicher Unterdruckkristallisator (100) nach Anspruch 5, ferner umfassend:
mehrere Dampfauslässe, die dafür ausgelegt sind, die eine des Paares von Impfkammern und eine der mehreren Siedekammern (302-3), die unterhalb der entsprechenden Impfkammer angeordnet ist, zu verbinden,
wobei die mehreren Dampfauslässe dafür ausgelegt sind, Dampf von der einen des Paares von Impfkammern der einen der mehreren Siedekammern (302-3) zuzuführen, um einen niedrigeren Dampfdruck in den mehreren Siedekammern (302-3) durch mindestens ein Steuerventil aufrechtzuerhalten.

7. Kontinuierlicher Unterdruckkristallisator (100) nach einem der Ansprüche 4 und 5, wobei der erste Satz von Auslasskanälen (606-1) und der zweite Satz von Auslasskanälen (606-2) dafür ausgelegt sind, sich mit einem Dampfzirkulationsnetz in fluidtechnischer Kommunikation zu befinden, das umfasst:
mindestens einen mechanischen Brüdenverdichter MVR, der dafür ausgelegt ist, den Dampfstrom von dem Paar von Impfkammern und den mehreren Siedekammern (302-3) aufzunehmen, und dafür ausgelegt ist, durch erneutes Verdichten des Dampfstrome einen Wasserdampfstrom zu erzeugen,
wobei eine Leitung sich in fluidtechnischer Kommunikation mit dem mindestens einen MVR befindet und dafür ausgelegt ist, den Wasserdampfstrom von dem mindestens einen MVR jeder des Paares von Impfkammern und jeder der mehreren Siedekammern (302-3) zuzuführen, wobei die Leitung an der Außenwand des zylindrischen Gehäuses (202) umlaufend positioniert ist und dafür ausgelegt ist, sich mit jedem der mehreren Einlasskanäle in fluidtechnischer Kommunikation zu befinden, um den Wasserdampfstrom, der von dem mindestens einen MVR aufgenommen worden ist, zuzuführen.

8. Kontinuierlicher Unterdruckkristallisator (100) nach einem der vorhergehenden Ansprüche, ferner umfassend:
eine erste Überlaufleitung, die sich in fluidtechnischer Kommunikation mit der mindestens einen Aufnahmekammer (302-1) befindet,
eine zweite Überlaufleitung, die sich in fluidtechnischer Kommunikation mit jeder des Paares von Impfkammern befindet; und
eine dritte Überlaufleitung, die sich in fluidtechnischer Kommunikation mit jeder der mehreren Siedekammern (302-3) befindet,
wobei jede der ersten Überlaufleitung, der zweiten Überlaufleitung und der dritten Überlaufleitung dafür ausgelegt ist, eine Überschussmenge von Mutterlauge von jeder der mehreren Unterdruckkammern (302) zu sammeln, wobei die mindestens eine Aufnahmekammer (302-1) dafür ausgelegt ist, die gesammelte Mutterlauge aufzunehmen.

9. Kontinuierlicher Unterdruckkristallisator (100) nach einem der vorhergehenden Ansprüche, wobei die erste Welle dafür ausgelegt ist, an ein erstes Antriebselement, das an dem oberen Abschnitt des zylindrischen Gehäuses (202) angeordnet ist, antreibbar gekoppelt zu werden, wobei der erste Satz von Rührvorrichtungen (614-1) unter den mehreren Rührvorrichtungen (614) innerhalb der mindestens einen Aufnahmekammer (302-1), dem Paar von Impfkammern und mindestens einer der mehreren Siedekammern (302-3) angeordnet ist; und
die zweite Welle dafür ausgelegt ist, an ein zweites Antriebselement, das an dem unteren Abschnitt des zylindrischen Gehäuses (202) angeordnet ist, antreibbar gekoppelt zu werden, wobei der zweite Satz von Rührvorrichtungen (614-2) unter den mehreren Rührvorrichtungen (614) innerhalb mindestens einer der mehreren Siedekammern (302-3) angeordnet ist.

10. Verfahren (900) zum Kristallisieren von Zucker in einem kontinuierlichen Unterdruckkristallisator (100) nach einem der Ansprüche 1-9, wobei das Verfahren (900) umfasst:
Aufnehmen von Speiselösung in mindestens einer Aufnahmekammer (302-1), die oberhalb eines Paares von Impfkammern und mehreren Siedekammern (302-3) positioniert ist, wobei die mindestens eine Aufnahmekammer (302-1), das Paar von Impfkammern und die mehreren Siedekammern (302-3) in einem zylindrischen Gehäuse koaxial übereinander gestapelt sind;
Eintropfen der Speiselösung in das Paar von Impfkammern, wobei die Speiselösung durch Hinzufügen einer Suspension während Eintropfens der Speiselösung in eine des Paares von Impfkammern aus der mindestens einen Aufnahmekammer (302-1) gesättigt wird;
Zuführen von Mutterlauge aus dem Paar von Impfkammern zu einer der mehreren Siedekammern (302-3), die unterhalb des Paars von Impfkammern positioniert sind, wobei die Mutterlauge in Massecuite umgewandelt wird, wobei mehrere Rührvorrichtungen (614) innerhalb jeder der mehreren Siedekammern (302-3) angeordnet sind, wobei die mehreren Rührvorrichtungen (614) an mindestens eine Welle gekoppelt sind, die dafür ausgelegt ist, durch mindestens ein Antriebselement angetrieben zu werden, das an einem eines oberen Abschnitts des zylindrischen Gehäuses (202) und eines unteren Abschnitts des zylindrischen Gehäuses (202) angeordnet ist, wobei die mindestens eine Welle eine erste Welle und eine zweite Welle umfasst, wobei die erste Welle dafür ausgelegt ist, einen ersten Satz von Rührvorrichtungen (614-1) unter den mehreren Rührvorrichtungen (614) anzutreiben, und wobei die zweite Welle dafür ausgelegt ist, einen zweiten Satz von Rührvorrichtungen (614-2) unter den mehreren Rührvorrichtungen (614) anzutreiben; und
kaskadenförmiges Führen der Massecuite aus einer der mehreren Siedekammern (320-3) in eine nachfolgende Siedekammer, wobei eine Konzentration der Massecuite in der nachfolgenden Siedekammer im Vergleich zu einer Konzentration der Massecuite, die aus der vorhergehenden Siedekammer unter den mehreren Siedekammern (302-3) aufgenommen wird, erhöht wird,
wobei ein Wasserdampfstrom jeder der mehreren Siedekammern (302-3) zugeführt wird, wobei der Wasserdampfstrom in einen Dampfstrom umgewandelt wird, der in einem Kopfstück gesammelt wird und anschließend erneut verdichtet wird, um den Wasserdampfstrom zu erzeugen, wobei der erneut verdichtete Wasserdampfstrom in jede der mehreren Siedekammern (320-3) und das Paar von Impfkammern eingespeist wird.

11. Verfahren (900) nach Anspruch 10, ferner umfassend gleichzeitiges gleichmäßiges Verteilen des Wasserdampfstroms durch mehrere Öffnungen auf jede des Paars von Impfkammern und jede der mehreren Siedekammern (302-3), wobei sich die mehreren Öffnungen um jede von mehreren Calandrias (602) befinden, die innerhalb des Paares von Impfkammern und der mehreren Siedekammern (302-3) angeordnet sind.

12. Verfahren (900) nach Anspruch 10, ferner umfassend:
Zirkulieren eines Dampfstroms mit einem zweiten Dampfdruck zwischen jeder des Paars von Impfkammern durch einen ersten Satz von Auslasskanälen (606-1), wobei der erste Satz von Auslasskanälen (606-1) umlaufend um das Paar von Impfkammern positioniert ist; und
Zirkulieren eines Dampfstroms mit einem dritten Dampfdruck zwischen jeder der mehreren Siedekammern (302-3) durch einen zweiten Satz von Auslasskanälen (606-2), wobei der zweite Satz von Auslasskanälen (606-2) umlaufend um die mehreren Siedekammern (302-3) positioniert ist.

13. Verfahren (900) nach einem der Ansprüche 10 und 12, ferner umfassend:
Zuführen von Dampf durch mehrere Dampfauslässe aus der einen des Paars von Impfkammern zu der einen der mehreren Siedekammern (302-3), um in den mehreren Siedekammern (302-3) einen niedrigeren Dampfdruck aufrechtzuerhalten,
wobei die mehreren Dampfauslässe dafür ausgelegt sind, die eine des Paars von Impfkammern und die eine der mehreren Siedekammern (302-3), die unterhalb der entsprechenden Impfkammer angeordnet ist, zu verbinden.

14. Verfahren (900) nach Anspruch 10, ferner umfassend:
Aufnehmen des Dampfstroms aus dem Paar von Impfkammern und den mehreren Siedekammern (302-3) durch mindestens einen mechanischen Brüdenverdichter MVR;
erneutes Verdichten des Dampfstroms durch den mindestens einen MVR, um einen Wasserdampfstrom zu erzeugen; und
Zuführen des Wasserdampfstroms aus dem mindestens einen MVR zu jeder des Paars von Impfkammern und jeder der mehreren Siedekammern (302-3).

15. Verfahren (900) nach Anspruch 10, wobei die Speiselösung, die einen Zuckergehalt in einem Bereich von 75 °Brix bis 78 °Brix aufweist, mit einer Temperatur von 100 - 106 °C in der mindestens einen Aufnahmekammer (302-1) aufgenommen wird.

16. Verfahren (900) nach Anspruch 10, ferner umfassend Sammeln der Massecuite aus einer der mehreren Siedekammern (302-3), die an einem unteren Abschnitt des zylindrischen Gehäuses (202) angeordnet sind, wobei:
eine Temperatur der Massecuite in einem Bereich von 52 °C bis 69 °C liegt, basierend auf einem Druck eines Wasserdampfstroms, der jeder des Paars von Impfkammern und jeder der mehreren Siedekammern (302-3) zugeführt wird; und
ein Zuckergehalt der Massecuite in einem Bereich von 89,3 °Brix bis 90,97 °Brix liegt, basierend auf dem Druck des Dampfstroms, der jeder des Paars von Impfkammern und jeder der mehreren Siedekammern (302-3) zugeführt wird.

## Revendications

1. Cristalliseur à vide continu (100) pour la cristallisation du sucre, le cristalliseur sous vide continu (100) comprenant :
un boîtier cylindrique (202) comportant au moins un passage d'entrée (605) adapté pour recevoir un flux de vapeur d'eau et au moins un passage de sortie (606) adapté pour recevoir un flux de vapeur ;
une pluralité de chambres à vide (302) empilées coaxialement les unes sur les autres dans le boîtier cylindrique (202), la pluralité de chambres à vide (302) étant adaptées pour être en communication fluide les unes avec les autres et avec l'au moins un passage d'entrée (605) et l'au moins un passage de sortie (606), dans lequel l'une de la pluralité de chambres à vide (302) est adaptée pour recevoir la liqueur mère qui descend en cascade à travers chacune de la pluralité de chambres à vide (302) ;
une pluralité de cuves de réacteur (602) disposées à l'intérieur de la pluralité de chambres à vide (302) et adaptées à chauffer la liqueur mère, dans lesquelles chacune de la pluralité de cuves de réacteur (602) est adaptée à recevoir la vapeur à travers une pluralité d'ouvertures situées autour de chacune de la pluralité de cuves de réacteur (602), dans lequel la pluralité d'ouvertures est en communication fluidique avec l'au moins un passage d'entrée (605) ; et
une pluralité d'agitateurs (614) disposés dans la pluralité de chambres à vide (302), dans lequel la pluralité d'agitateurs (614) est couplée à au moins un arbre adapté pour être entraîné par au moins un élément d'entraînement disposé au niveau d'une partie parmi une partie supérieure du boîtier cylindrique (202) et une partie inférieure du boîtier cylindrique (202), dans lequel l'au moins un arbre comprend un premier arbre et un second arbre, dans lequel le premier arbre est adapté pour entraîner un premier ensemble d'agitateurs (614-1) parmi la pluralité d'agitateurs (614), et dans lequel le second arbre est adapté pour entraîner un second ensemble d'agitateurs (614-2) parmi la pluralité d'agitateurs (614),
dans lequel le flux de vapeur provenant de chacune de la pluralité de chambres à vide (302) est collecté dans un collecteur, puis recomprimé pour générer le flux de vapeur qui est envoyé dans chacune de la pluralité de chambres à vide (302) à travers la pluralité d'ouvertures.

2. Cristalliseur à vide continu (100) selon la revendication 1, dans lequel la pluralité de chambres à vide (302) comprend au moins une chambre de réception (302-1), une pluralité de chambres d'ensemencement disposées sous l'au moins une chambre de réception (302-1), et une pluralité de chambres d'ébullition (302-3) disposées sous la pluralité de chambres d'ensemencement, chacune de la pluralité de chambres d'ébullition (302-3) est adaptée à convertir la liqueur mère en masse cuite qui est continuellement acheminée en cascade vers une chambre d'ébullition suivante parmi la pluralité de chambres d'ébullition (302-3).

3. Cristalliseur à vide continu (100) selon la revendication 2, dans lequel l'au moins une chambre de réception (302-1), la pluralité de chambres d'ensemencement et la pluralité de chambres d'ébullition (302-3) fonctionnent respectivement à une première pression de vapeur, une deuxième pression de vapeur et une troisième pression de vapeur, une valeur de la deuxième pression de vapeur étant supérieure à une valeur de la troisième pression de vapeur.

4. Cristalliseur à vide continu (100) selon la revendication 2, dans lequel chacun de l'au moins un passage d'entrée (605) et de l'au moins un passage de sortie (606) sont définis entre une paroi intérieure du boîtier cylindrique (202) et une paroi extérieure du boîtier cylindrique (202), l'au moins un passage d'entrée (605) comprenant :
une pluralité de passages d'entrée définis circonférentiellement entre la paroi intérieure et la paroi extérieure du boîtier cylindrique (202) et s'étendant verticalement depuis l'une d'une paire de chambres d'ensemencement à l'une de la pluralité de chambres d'ébullition (302-3) disposées dans la partie inférieure du boîtier cylindrique (202),
dans lequel chacun de la pluralité de passages d'entrée est adapté pour répartir de manière égale le flux de vapeur vers chacune de la paire de chambres d'ensemencement et chacune de la paire de chambres d'ébullition (302-3) à travers la pluralité d'ouvertures, simultanément.

5. Cristalliseur à vide continu (100) selon l'une quelconque des revendications 3 et 4, dans lequel l'au moins un passage de sortie (606) comprend :
un premier ensemble de passages de sortie (606-1) positionnés circonférentiellement autour de la paire de chambres d'ensemencement et adaptés pour faire circuler un flux de vapeur à la deuxième pression de vapeur entre chacune de la paire de chambres d'ensemencement ; et
un second ensemble de passages de sortie (606-2) positionnés circonférentiellement autour de la pluralité de chambres d'ébullition (302-3) et adaptés pour faire circuler un flux de vapeur à la troisième pression de vapeur entre chacune de la pluralité de chambres d'ébullition (302-3).

6. Cristalliseur à vide continu (100) selon la revendication 5, comprenant en outre :
une pluralité de sorties de vapeur adaptées pour relier l'une de la paire de chambres d'ensemencement et l'une de la pluralité de chambres d'ébullition (302-3) disposée sous la chambre d'ensemencement correspondante,
dans lequel la pluralité de sorties de vapeur est adaptée pour fournir la vapeur de l'une de la paire de chambres d'ensemencement à l'une de la pluralité de chambres d'ébullition (302-3) afin de maintenir une pression de vapeur inférieure dans la pluralité de chambres d'ébullition (302-3) au moyen d'au moins une vanne de contrôle.

7. Cristalliseur à vide continu (100) selon l'une quelconque des revendications 4 et 5, dans lequel le premier ensemble de passages de sortie (606-1) et le second ensemble de passages de sortie (606-2) sont adaptés pour être en communication fluidique avec un réseau de circulation de vapeur comprenant :
au moins un recompresseur mécanique de vapeur, RMV, adapté pour recevoir le flux de vapeur de la paire de chambres d'ensemencement et de la pluralité de chambres d'ébullition (302-3), et adapté à générer un flux de vapeur d'eau en recomprimant le flux de vapeur,
dans lequel un conduit, en communication fluidique avec l'au moins un RMV et adapté pour fournir le flux de vapeur d'eau provenant de l'au moins un RMV à chacune de la paire de chambres d'ensemencement et à chacune de la pluralité de chambres d'ébullition (302-3), le conduit est positionné de manière circonférentielle sur la paroi extérieure du boîtier cylindrique (202) et adapté pour être en communication fluidique avec chacun de la pluralité de passages d'entrée afin de fournir le flux de vapeur d'eau reçu de l'au moins un RMV.

8. Cristalliseur à vide continu (100) selon l'une quelconque des revendications précédentes, comprenant en outre :
un premier conduit de débordement en communication fluidique avec l'au moins une chambre de réception (302-1) ;
un deuxième conduit de débordement en communication fluidique avec chacune de la paire de chambres d'ensemencement ; et
un troisième conduit de débordement en communication fluidique avec chacune de la pluralité de chambres d'ébullition (302-3),
dans lequel chacun du premier conduit de débordement, du deuxième conduit de débordement et du troisième conduit de débordement est adapté pour collecter la quantité excédentaire de liqueur mère de chacune de la pluralité de chambres à vide (302), l'au moins une chambre de réception (302-1) est adaptée pour recevoir la liqueur mère collectée.

9. Cristalliseur à vide continu (100) selon l'une quelconque des revendications précédentes, dans lequel le premier arbre est adapté pour être en liaison de transmission avec un premier élément d'entraînement disposé dans la partie supérieure du boîtier cylindrique (202), dans lequel le premier ensemble d'agitateurs (614-1) parmi la pluralité d'agitateurs (614) est disposé dans l'au moins une chambre de réception (302-1), la paire de chambres d'ensemencement et au moins une de la pluralité de chambres d'ébullition (302-3) ; et
le second arbre est adapté pour être en liaison de transmission avec un second élément d'entraînement disposé dans la partie inférieure du boîtier cylindrique (202), dans lequel le second ensemble d'agitateurs (614-2) parmi la pluralité d'agitateurs (614) est disposé dans au moins l'une de la pluralité de chambres d'ébullition (302-3).

10. Procédé (900) de cristallisation du sucre dans un cristalliseur à vide continu (100) selon l'une quelconque des revendications 1 à 9, le procédé (900) comprenant :
la réception d'une solution d'alimentation dans au moins une chambre de réception (302-1) placée au-dessus d'une paire de chambres d'ensemencement et d'une pluralité de chambres d'ébullition (302-3), dans lequel l'au moins une chambre de réception (302-1), la paire de chambres d'ensemencement et la pluralité de chambres d'ébullition (302-3) sont empilées de manière coaxiale dans un boîtier cylindrique (202) les unes au-dessus des autres ;
le versement de la solution d'alimentation dans la paire de chambres d'ensemencement, dans lequel la solution d'alimentation est saturée par l'ajout de suspension tout en versant la solution d'alimentation dans l'une de la paire de chambres d'ensemencement à partir de l'au moins une chambre de réception (302-1) ;
la fourniture de la liqueur mère de la paire de chambres d'ensemencement à l'une de la pluralité de chambres d'ébullition (302-3) situées sous la paire de chambres d'ensemencement, dans lequel la liqueur mère est convertie en masse cuite, dans lequel une pluralité d'agitateurs (614) sont disposés dans chacune de la pluralité de chambres d'ébullition (302-3), dans lequel la pluralité d'agitateurs (614) est couplée à au moins un arbre adapté pour être entraîné par au moins un élément d'entraînement disposé au niveau d'une partie parmi une partie supérieure du boîtier cylindrique (202) et une partie inférieure du boîtier cylindrique (202), dans lequel l'au moins un arbre comprend un premier arbre et un second arbre, dans lequel le premier arbre est adapté pour entraîner un premier ensemble d'agitateurs (614-1) parmi la pluralité d'agitateurs (614), et dans lequel le second arbre est adapté pour entraîner un second ensemble d'agitateurs (614-2) parmi la pluralité d'agitateurs (614) ; et
la mise en cascade de la masse cuite de l'une de la pluralité de chambres d'ébullition (302-3) vers la chambre d'ébullition suivante, dans lequel une concentration de la masse cuite est augmentée dans la chambre d'ébullition suivante par rapport à une concentration de la masse cuite reçue de la chambre d'ébullition précédente parmi la pluralité de chambres d'ébullition (302-3),
dans lequel un flux de vapeur d'eau est fourni à chacune de la pluralité de chambres d'ébullition (302-3), le flux de vapeur d'eau est converti en un flux de vapeur qui est recueilli dans un collecteur, puis recomprimé afin de générer le flux de vapeur d'eau, le flux de vapeur d'eau recomprimé est envoyé à chacune de la pluralité de chambres d'ébullition (302-3) et à la paire de chambres d'ensemencement.

11. Procédé (900) selon la revendication 10, comprenant en outre la répartition égale du flux de vapeur d'eau vers chacune de la paire de chambres d'ensemencement et chacune de la pluralité de chambres d'ébullition (302-3) par une pluralité d'ouvertures simultanément, dans lequel la pluralité d'ouvertures est située autour de chacune d'une pluralité de cuves de réacteur (602) disposées à l'intérieur de la paire de chambres d'ensemencement et de la pluralité de chambres d'ébullition (302-3).

12. Procédé (900) selon la revendication 10, comprenant en outre :
la mise en circulation d'un flux de vapeur à une deuxième pression de vapeur entre chacune de la paire de chambres d'ensemencement à travers un premier ensemble de passages de sortie (606-1), dans lequel le premier ensemble de passages de sortie (606-1) est positionné circonférentiellement autour de la paire de chambres d'ensemencement ; et
la mise en circulation d'un flux de vapeur à une troisième pression de vapeur entre chacune de la pluralité de chambres d'ébullition (302-3) à travers un second ensemble de passages de sortie (606-2), dans lequel le second ensemble de passages de sortie (606-2) est positionné circonférentiellement autour de la pluralité de chambres d'ébullition (302-3).

13. Procédé (900) selon l'une quelconque des revendications 10 et 12, comprenant en outre :
la fourniture de la vapeur, à travers une pluralité de sorties de vapeur, de l'une de la paire de chambres d'ensemencement à l'une de la pluralité de chambres d'ébullition (302-3) afin de maintenir une pression de vapeur inférieure dans la pluralité de chambres d'ébullition (302-3),
dans lequel la pluralité de sorties de vapeur est adaptée pour relier l'une de la paire de chambres d'ensemencement et l'une de la pluralité de chambres d'ébullition (302-3) disposée sous la chambre d'ensemencement correspondante.

14. Procédé (900) selon la revendication 10, comprenant en outre :
la réception, par au moins un recompresseur mécanique de vapeur, RMV, du flux de vapeur de la paire de chambres d'ensemencement et de la pluralité de chambres d'ébullition (302-3) ;
la recompression du flux de vapeur par l'au moins un RMV pour générer un flux de vapeur d'eau ; et
la fourniture du flux de vapeur d'eau de l'au moins un RMV à chacune de la paire de chambres d'ensemencement et à chaque chambre de la pluralité de chambres d'ébullition (302-3).

15. Procédé (900) selon la revendication 10, dans lequel la solution d'alimentation ayant une teneur en sucre dans une plage de 75 °Brix à 78 °Brix est reçue dans l'au moins une chambre de réception (302-1) à une température de 100 à 106 °C.

16. Procédé (900) selon la revendication 10, comprenant en outre la collecte de la masse cuite dans l'une de la pluralité de chambres d'ébullition (302-3) disposées dans une partie inférieure du boîtier cylindrique (202), dans lequel :
une température de la masse cuite se situe dans une plage de 52 °C à 69 °C en fonction d'une pression d'un flux de vapeur d'eau fourni à chacune de la paire de chambres d'ensemencement et à chacune de la pluralité de chambres d'ébullition (302-3) ; et
la teneur en sucre de la masse cuite se situe dans une plage de 89,3 °Brix à 90,97 °Brix en fonction de la pression du flux de vapeur d'eau fourni à chacune de la paire de chambres d'ensemencement et à chacune de la pluralité de chambres d'ébullition (302-3).
